# EUROPÄISCHE PATENTANMELDUNG

(11) **EP 2 259 034 A1**
(43) Veröffentlichungstag der Anmeldung: **08.12.2010**
(21) Anmeldenummer: 09161604.5
(22) Anmeldetag: 29.05.2009
(51) Int. Cl.: G01J 3/02, G01J 3/46, G01J 3/50

(54) **Dentalfarben-Analysevorrichtung**

(71) Anmelder: Ivoclar Vivadent AG, 9494 Schaan (LI)
(72) Erfinder: Die Erfindernennung liegt noch nicht vor
(74) Vertreter: Baronetzky, Klaus

(57) **Zusammenfassung**

Die Erfindung betrifft eine Dentalfarben-Analysevorrichtung, mit einem Gehäuse, einer eine Speichereinheit aufweisenden Rechnervorrichtung und einem Bildschirm, auf dem ein Referenzobjekt gemeinsam mit wenigstens einem Zahn und/oder einen Zahnfleischbereich darstellbar ist, wobei mindestens ein Bildausschnitt des Referenzobjekts (erster Bildausschnitt) sowie mindestens ein Bildausschnitt des Zahns, eines Zahnbereichs oder Zahnfleischbereichs (zweiter Bildausschnitt) von der Rechnervorrichtung erfaßbar ist, wobei das Referenzobjekt ein dentaler Farbschlüssel 10 ist, der Farbmuster 12 aufweist, die nebeneinander angeordnet sind und je eine Dentalfarbe wiedergeben, und dass die Farbe des zweiten insbesondere wählbaren Bildausschnitts von der Rechnervorrichtung mit dem dargestellten Farbmustern 12 verglichen wird, und dass die Rechnervorrichtung anzeigt oder ausgibt, welches Farbmuster 12 der Farbe des zweiten Bildausschnitts am ähnlichsten ist.

## Beschreibung

Die Erfindung betrifft einen Dentalfarben-Analysevorrichtung, gemäß dem Oberbegriff von Anspruch 1.

Für die Bestimmung von Zahnfarben werden seit langer Zeit Farbschlüssel eingesetzt, die es ermöglichen sollen, bei der Auswahl einer Farbe eines zu restaurierenden Zahns eine möglichst gute Annäherung an die Nachbarzähne zu erzielen, um so dem Restaurat ein natürliches Erscheinungsbild geben zu können.

Ein Beispiel für einen derartigen Zahnschlüssel ist aus der DE 195 09 830 C2 ersichtlich.

In neuerer Zeit wurde auf eine elektronische Farbbestimmung vorgenommen, wie es beispielsweise aus der DE 10 2007 035 610 A1 ersichtlich ist.

Innerhalb eines Zahns ändert sich der Farbton typischerweise, und insbesondere auch die Transluzenz.

Um menschliche Einflüsse bei der Beurteilung auszuschließen, ist es auch vorgeschlagen worden, eine vorhandene Zahnfarbe mit einer Dentalkamera zu erfassen und elektronisch die geeignete Zahnfarbe wie A2, A3 usw. auszuwählen. Für eine derartige Lösung müssen jedoch aufwändige Kalibrierungsschritte vorgenommen werden, und eine elektronische Farberfassungsvorrichtung kommt eher bei größeren Zahnarztpraxen in Frage.

Eine elektronische Farberfassung ergibt überraschend jedoch vielfach nicht die optimalen Ergebnisse, nachdem eine Dentalkamera beispielsweise die Transluzenz nur unzureichend erfasst. Um dies zu verbessern, wird in manchen Fällen ein zusätzlicher Abgleich mit einem handelsüblichen Farbschlüssel vorgenommen, was im Grunde ein Zusatzaufwand mit sich bringt.

Ferner ist es bereits vorgeschlagen worden, eine Bilderfassung eines bestehenden und von einer Dentalkamera aufgenommenen Bildes automatisch vorzunehmen. Um die Farbfehler zu kompensieren, ist es auch vorgeschlagen worden, eine Farbtransformation durchzuführen, wobei es sich gezeigt hat, dass diese Lösung trotz des anfallenden Aufwands leider keine verbesserten Ergebnisse erbringt.

Daher liegt der Erfindung die Aufgabe zugrunde, eine Dentalfarben-Analysevorrichtung gemäß dem Oberbegriff von Anspruch 1 zu schaffen, die für die praktische Realisierung der Erstellung eines Restauratzahns oder Teilrestaurats verbessert ist und eine harmonischere Realisierung der Restaurate ermöglicht.

Diese Aufgabe wird erfindungsgemäß durch Anspruch 1 gelöst. Vorteilhafte Weiterbildungen ergeben sich aus den Unteransprüchen.

Die erfindungsgemäße Dentalfarben-Analysevorrichtung zeichnet sich dadurch aus, dass mit einer Bilderfassungsvorrichtung in einem einzigen Bild sowohl ein Zahn und/oder sein Nachbarzahn als auch ein dentaler Farbschlüssel aufgenommen und in einer Rechnervorrichtung abgespeichert werden können. Damit lassen sich automatisch die Farbfehler der Bilderfassungsvorrichtung kompensieren, denn der dentaler Farbschlüssel zeigt bekanntlich die echten Zahnfarben wie A2, A3 und die Farberfassungsvorrichtung muss lediglich sicherstellen, dass innerhalb des Bildes keine Chromogradienten bestehen, was aber typischerweise bei den üblichen CCD-Sensoren nicht der Fall ist.

Überraschend ist erfindungsgemäß die Kalibrierung der Bilderfassungsvorrichtung nicht erforderlich, und auch nicht das aufwändige Nachkalibrieren, das in Zahnlabors besonders unerwünscht ist. Erfindungsgemäß ist es ferner vorgesehen, dass bei der Darstellung auf einem Bildschirm automatisch von der Rechnervorrichtung ein Farbvergleich vorgenommen wird und das Farbmuster des Referenzobjekts, das als dentaler Farbschlüssel ausgebildet ist als erster Bildausschnitt, angezeigt oder ausgegeben wird, das der Farbe des abgespeicherten Zahns, Zahnbereichs oder Zahnfleischbereichs am ähnlichsten ist. Dies kann auch ohne Weiteres elektronisch vorgenommen werden, wobei überraschend die Farbfestlegung durch den direkten visuellen Vergleich auf dem Bildschirm deutlich verbessert werden kann. Das Referenzobjekt wird erfindungsgemäß zusätzlich in den zweiten Bildausschnitt auf dem Bildschirm dargestellt, insbesondere neben diesem.

Hierdurch lassen sich praktisch die Vorteile der visuellen Beurteilung durch einen Menschen mit denen des elektronischen Vergleichs kombinieren, denn der Zahntechniker oder Zahnarzt kann hier eingreifen und beispielsweise okklusale Bereich der Zähne transparenter gestalten als dies von dem elektronischen Vergleich her vorgegeben ist.

In vorteilhafter Ausgestaltung wird praktisch automatisch eine Approximation mit einheitlich gefärbten Flächen des erfassten Zahns oder Zahnbereichs vorgenommen. Die Wiedergabe muss nicht als Farbwiedergabe vorgegeben sein, sondern kann beispielsweise auch über eine Schraffur oder ein Muster, das mit A2, A3 usw. bezeichnet ist, dem Zahnarzt oder Zahntechniker gleich die erforderliche Hilfestellung an die Hand geben, welche Zahnfarbe er wo verwenden sollte.

Erfindungsgemäß ist es besonders günstig, wenn der Farbschlüssel besonders klein ist und insgesamt eine geringere Größe als der Zahn hat. Dann kann er auch auf oder an den Zahn aufgebracht werden, um die gemeinsame Bestimmung der Zahnfarben zu ermöglichen, und es besteht eine enge räumliche Nachbarschaft zwischen dem Farbmuster als Referenz und dem zweiten Bildausschnitt, der den Zahn wiedergibt.

Die Anzahl der Farbmuster des Zahnschlüssels kann in beliebiger Weise an die Erfordernisse angepasst werden; typischerweise können mehrere verschiedene Farbschlüssel verwendet werden, und es wird derjenige Farbschlüssel ausgewählt, der vom Grundton her für das Restaurat am geeignetsten erscheint, wobei dieser Farbschlüssel beispielsweise 16 Farbmuster aufweisen kann.

Die von der Rechnervorrichtung ausgegebenen und dort abgespeicherten Ergebnisse lassen sich auch ohne Weiteres elektronisch aufbereitet exportieren, beispielsweise auch zu einer CAD-/CAM-Vorrichtung für die Herstellung von Zähnen, wobei es besonders günstig ist, wenn hier vom Zahntechniker noch Korrekturen manuell vorgenommen werden können.

Typischerweise ist der Zahnschlüssel an einer beliebigen Stelle als Miniatur-Zahnschlüssel auf der vestibulären Fläche des Zahns angebracht und ist so realisiert, dass er eng benachbart dem zweiten Bildabschnitt ist. Er kann verschiedbar angebracht sein, um alle Bereiche der vestibulären Fläche erfassen zu können.

Erfindungsgemäß besonders günstig ist es, dass das Farbmuster auf dem Bildschirm in Form einer räumlich begrenzten insbesondere von einer Randlinie umgebenen Fläche wiedergegeben ist, wobei insbesondere wenigstens die Fläche auf die ein Cursor zeigt, ist.

Erfindungsgemäß besonders günstig ist es, dass die Farbmuster des Farbschlüssels nebeneinander angeordnet sind und zusammen eine Größe aufweisen, die höchstens doppelt so groß und mindestens halb so groß wie die Darstellung des Zahnbereichs oder Zahnfleischbereichs auf dem Bildschirm ist.

Erfindungsgemäß besonders günstig ist es, dass das dem ersten Bildausschnitt ähnlichste Farbmuster optisch und/oder akustisch selektiert angezeigt wird, während eine Zeigereinheit den zweiten Bildausschnitt, also den Zahn, den Zahnbereich oder den Zahnfleischbereich überfährt.

Erfindungsgemäß besonders günstig es es, dass zusätzlich zur Anzeige des Farbmusters, insbesondere des selektierten Farbmusters, dessen Benennung (A1, A2, usw.) optisch, insbesondere auf dem Bildschirm angezeigt ist, und/oder akkustisch ausgegeben ist.

Erfindungsgemäß besonders günstig ist es, dass der Farbschlüssel mindestens 3, insbesondere 16 verschiedene Farbmuster aufweist, wobei insbesondere mindestens ein Farbmuster einer Bleachfarbe entspricht.

Erfindungsgemäß besonders günstig ist es, dass der Farbschlüssel mindestens ein Farbmuster aufweist, das einer Zahnfleischfarbe entspricht.

Erfindungsgemäß besonders günstig ist es, dass die Analysevorrichtung eine Kamera aufweist oder mit einer Kamera zusammenwirkt.

Erfindungsgemäß besonders günstig ist es, dass das ein Gehäuse, eine Rechnervorrichtung mit einer Speichereinheit und einen Bildschirm aufweist, auf dem ein Referenzobjekt gemeisam mit wenigstens einem Zahn und/oder einem Zahnfleischbereich dargestellt wird, wobei mindestens ein Bildausschnitt des Referenzobjekts (erster Bildausschnitt) sowie mindestens ein Bildausschnitt des Zahns, eines Zahnbereichs oder Zahnfleischbereichs (zweiter Bildausschnitt) von der Rechnervorrichtung erfasst wird.

Erfindungsgemäß besonders günstig ist es, dass das Referenzobjekt ein dentaler Farbschlüssel ist, der Farbmuster aufweist, die nebeneinander angeordnet sind und je eine Dentalfarbe wiedergeben, und dass die Farbe des zweiten insbesondere wählbaren Bildausschnitts von der Rechnervorrichtung mit dem dargestellten Farbmustern verglichen wird, und dass die Rechnervorrichtung anzeigt oder ausgibt, welches Farbmuster der Farbe des zweiten Bildausschnitts am ähnlichsten ist.

Erfindungsgemäß besonders günstig ist es, dass die Rechnervorrichtung automatisch die Dentalfarbe signalisiert, insbesondere optisch und/oder akkustisch ausgibt.

Erfindungsgemäß besonders günstig ist es, dass in der Speichereinheit mindestens die Daten zweier Zähne abspeicherbar sind, insbesondere die einander benachbarter Zähne, die über eine Erfassungsvorrichtung wie eine Kamera der Speichereinheit über eine Datentransportvorrichtung zugeleitet sind.

Erfindungsgemäß besonders günstig ist es, dass die Dentalfarbe exportiert - beispielsweise zu einer CAD-/CAM-Vorrichtung zur Herstellung von Zähnen - und/oder signalisiert wird.

Erfindungsgemäß besonders günstig ist es, dass der erste Bildausschnitt mit Hilfe der Software in einzelne, den geometrischen Abmessungen der Farbmuster entsprechende Flächensegmente unteilbar ist, jedem Flächensegment von der Software eine bestimmte, in der Software hinterlegte Dentalfarbe zugewiesen wird und die Farbe des, wenigstens einen Teil des eines Zahnes oder einen Teil des Zahnfleisches beinhaltenden, zweiten Bildausschnitts mit den verschiedenen Farbmustern verglichen und von der Datenrechen- und-speicherheinheit jene Dentalfarbe angezeigt oder ausgegeben wird, die dem Farbmuster zugewiesen wurde, dessen Farbe der Farbe des zweiten Bildausschnitts entspricht oder dieser am ähnlichsten ist.

Erfindungsgemäß besonders günstig ist es, dass insbesondere seine Fläche kleiner als die vestibuläre (Iabiale oder bukkale) Fläche von zwei Zähnen in der Darstellung auf dem Bildschirm ist, insbesondere geringer als die Fläche eines Zahns.

Weitere Vorteile, Einzelheiten und Merkmale ergeben sich aus der nachfolgenden Beschreibung mehrerer Ausführungsformen der Erfindung anhand der Zeichnung.

Es zeigen:
- Fig. 1: eine perspektivische Darstellung einer Ausführungsform eines erfindungsgemä- ßen Zahnschlüssels in schematischer Darstellung;
- Fig. 2: eine perspektivische Darstellung einer erfindungsgemäßen Dentalanalysenvor- richtung;
- Fig. 3: eine Draufsicht auf einen erfindungsgemäßen dentalen Farbschlüssel nach Anbringen auf einen Zahn; und
- Fig. 4: eine Draufsicht auf eine weitere Ausführungsform eines erfindungsgemäßen Farbschlüssels nach Aufbringung auf einen Zahn.

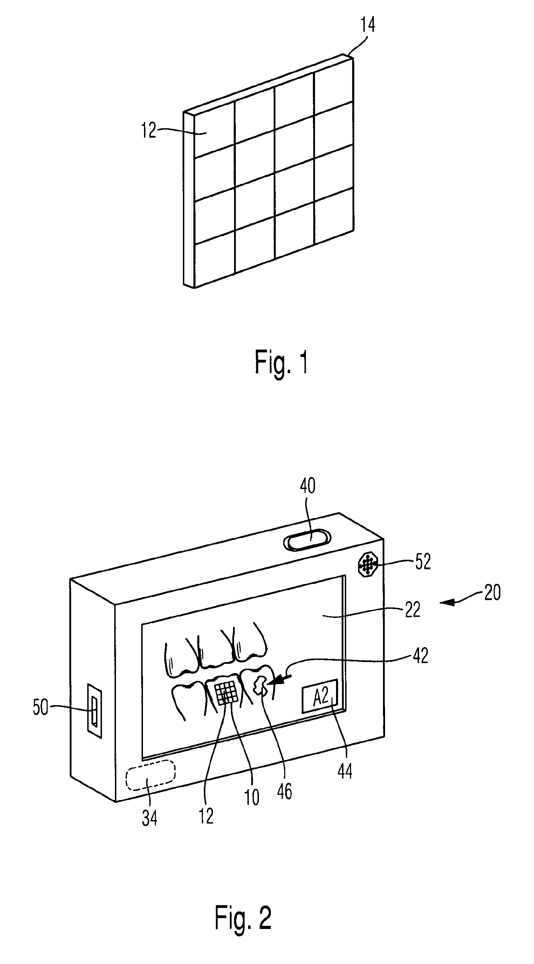

Der in Fig. 1 dargestellte erfindungemäße dentale Farbschlüssel 10 weist eine Vielzahl, nämlich 16, Farbmuster 12 auf, die nach der Art einer Matrix angeordnet sind. Jedes Farbmuster entspricht einer handelsüblichen Zahnfarbe wie A2, A3, A4 usw. und bevorzugt sind einander ähnliche Zahnfarben benachbart angeordnet.

Die Farbmuster 12 sind auf dem plättchenförmigen Farbschlüssel fest angebracht. Der Farbschlüssel weist hierzu einen dünnen Grundkörper 14 auf, der dafür geeignet ist, auf einem Zahn befestigt zu werden, und zwar auf dessen vestibulärer Fläche. Die Befestigung kann entweder mit einem Klebstoff erfolgen, der den Grundkörper 14 in einer Weise festhält, dass er sich mindestens bei leichtem Anstoßen mit der Zunge nicht löst, oder mit einer Klammer, die den Zahn, bevorzugt einen Schneidezahn, übergreift und hierdurch die erwünschte Klemmwirkung bereitstellt.

Es ist auch möglich, den Grundkörper etwas biegsam zu gestalten, so dass er sich besser der ganz leicht gewölbten Oberfläche des Schneidezahns anpassen kann. Bevorzugt ist der Grundkörper deutlich kleiner als ein Zahn, beispielsweise halb so breit, und signifikant dünner, beispielsweise mehr als eine Zehnerpotenz. Hierdurch liegt der erfindungsgemäße Farbschlüssel 10 flächig auf dem Zahn auf, und es ist möglich, einen unmittelbaren Vergleich zwischen dem Farbmuster 12 und dem Zahn zu ermöglichen. Hierzu verbleiben ausreichende freie Bereiche der vestibulären Fläche des Zahns, wobei es sich versteht, dass auch ohne Weiteres ein Nachbarzahn mit dem erfindungsgemäßen Farbschlüssel 10 vergleichbar ist.

Aus Fig. 2 ist eine dentale Analysevorrichtung 20 ersichtich. Die dentale Analysevorrichtung 20 weist einen Bildschirm 22 auf, so wie eine Steuereinheit 34. Die dentale Analysevorrichtung 20 weist an der nicht dargestellten, also dem Bildschirm 22 gegenüber liegenden Seite einen CCD-Sensor mit einer Optik auf, um eine Bilderfassung durch eine digitale Aufnahme zu ermöglichen. Hierzu ist ein Auslöser 40 in von Digitalkameras bekannter Weise auf der Oberseite der Analysevorrichtung 20 angebracht.

Die Steuereinheit 34, die gleichzeitig die Rechnervorrichtung und die Speichereinheit umfasst, nimmt nun ein Bild der vestibulären Mundsituation des Patienten mit angebrachtem Farbschlüssel 10 auf. Ein Cursor 42 lässt sich über den Bildschirm 22 bewegen, beispielsweise über einen Touchscreen. Bei Bewegung des Cursors 42 über den Bildschirm 22 wird dann je eine Farbmusterbezeichnung 44 wie "A2" in einem besonderen Feld auf dem Bildschirm eingeblendet, und zugleich eine Kontur 46, die einer angewählten Farbmuster-Farbe 12 des dentalen Farbschlüssels 10 entspricht. Da der dentale Farbschlüssel zusammen mit der Zahnsituation aufgenommen ist, ergeben sich auch ohne Kalibrierung insofern keine Farbfehler.

Damit wird für einen Zahn der Farbverlauf anhand der zur Verfügung stehenden dentalen Zahnfarben festgelegt. Das so abgespeicherte Bild lässt sich nun über eine Schnittstelle 50 in beliebiger geeigneter Weise ausleben und weiter verarbeiten.

Über einen Lautsprecher 52 können zusätzlich in beliebiger Weise akkustische Signale ausgegeben werden, beispielsweise auch die erfassten Farbmuster genannt werden.

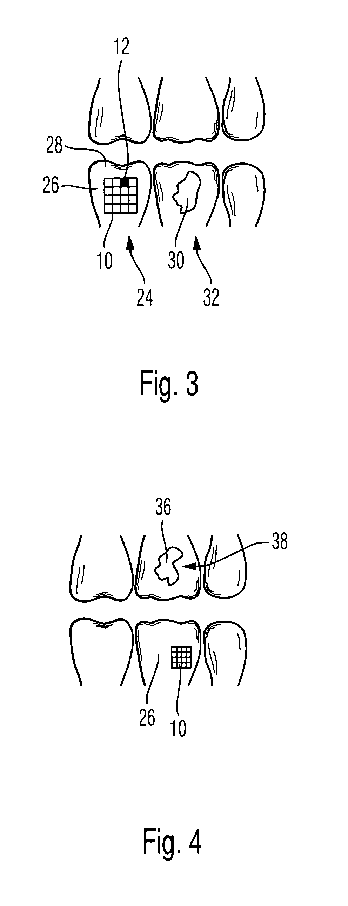

Aus Fig. 3 ist ersichtlich, in welcher Weise ein erfindungsgemäßer Farbschlüssel 10 auf einem Zahn 24 angebracht sein kann. In dem dargestellten Ausführungsbeispiel ist der Farbschlüssel 10 mittig auf der vestibulären Fläche 26 des Zahns angebracht, so dass freie Flächen 28 den Zahnschlüssel 10 allseits umgeben.

Durch optischen Vergleich - sei es direkt oder mit Hilfsmitteln - gelingt es, die Übereinstimmung eines Farbmusters 12 mit einer Fläche 30 eines Nachbarzahns 32 zu erfassen, so dass für diese Fläche 30 die Zahnfarbe festliegt und damit erfasst ist.

Besonders günstig ist es, wenn dies bei bei fotografischer Unterstützung mit der gleichen fotografischen Aufnahme realisiert ist, da dann keine Kalibrierung erforderlich ist, sondern die betreffende Zahnfarbe automatisch erfasst wird.

Aus Fig. 4 ist ersichtlich, in welcher Weise ein Farbschlüssel 10 eingesetzt wird, um einen Bereich 36 eines Antagonisten 38 zu erfassen. In der dargestellten Ausführungsform ist der Zahnschlüssel 10 distal an der vestibulären Fläche des Zahns angebracht, so dass an drei Seiten vergleichweise große Freiflächen 26 bestehen, die für die Beurteilung der Zahnfarbe besonders gut geeignet sind.

## Patentansprüche

1. Dentalfarben-Analysevorrichtung, mit einem Gehäuse, einer eine Speichereinheit aufweisenden Rechnervorrichtung und einem Bildschirm, auf dem ein Referenzobjekt gemeinsam mit wenigstens einem Zahn und/oder einen Zahnfleischbereich darstellbar ist, wobei mindestens ein Bildausschnitt des Referenzobjekts (erster Bildausschnitt) sowie mindestens ein Bildausschnitt des Zahns, eines Zahnbereichs oder Zahnfleischbereichs (zweiter Bildausschnitt) von der Rechnervorrichtung erfaßbar ist, **dadurch gekennzeichnet, dass** das Referenzobjekt ein dentaler Farbschlüssel (10) ist, der Farbmuster (12) aufweist, die nebeneinander angeordnet sind und je eine Dentalfarbe wiedergeben, und dass die Farbe des zweiten insbesondere wählbaren Bildausschnitts von der Rechnervorrichtung mit dem dargestellten Farbmustern (12) verglichen wird, und dass die Rechnervorrichtung anzeigt oder ausgibt, welches Farbmuster (12) der Farbe des zweiten Bildausschnitts am ähnlichsten ist.

2. Analysevorrichtung nach Anspruch 1, **dadurch gekennzeichnet, dass** das Farbmuster (12) auf dem Bildschirm in Form einer räumlich begrenzten insbesondere von einer Randlinie umgebenen Fläche wiedergegeben ist, wobei insbesondere wenigstens die Fläche auf die ein Cursor zeigt, ist.

3. Analysevorrichtung nach einem der vorhergehenden Ansprüche, **dadurch gekennzeichnet, dass** die Farbmuster (12) des Farbschlüssels (10) nebeneinander angeordnet sind und zusammen eine Größe aufweisen, die höchstens doppelt so groß und mindestens halb so groß wie die Darstellung des Zahnbereichs oder Zahnfleischbereichs auf dem Bildschirm ist.

4. Analysevorrichtung nach einem der vorhergehenden Ansprüche, **dadurch gekennzeichnet, dass** das dem ersten Bildausschnitt ähnlichste Farbmuster (12) optisch und/oder akustisch selektiert angezeigt wird, während eine Zeigereinheit den zweiten Bildausschnitt, also den Zahn, den Zahnbereich oder den Zahnfleischbereich überfährt.

5. Analysevorrichtung nach einem der vorhergehenden Ansprüche, **dadurch gekennzeichnet, dass** zusätzlich zur Anzeige des Farbmusters (12), insbesondere des selektierten Farbmusters (12), dessen Benennung (A1, A2, usw.) optisch, insbesondere auf dem Bildschirm angezeigt ist, und/oder akkustisch ausgegeben ist.

6. Analysevorrichtung nach einem der vorhergehenden Ansprüche, **dadurch gekennzeichnet, dass** der Farbschlüssel (10) mindestens 3, insbesondere 16 verschiedene Farbmuster (12) aufweist, wobei insbesondere mindestens ein Farbmuster (12) einer Bleachfarbe entspricht.

7. Analysevorrichtung nach einem der vorhergehenden Ansprüche, **dadurch gekennzeichnet, dass** der Farbschlüssel (10) mindestens ein Farbmuster (12) aufweist, das einer Zahnfleischfarbe entspricht.

8. Analysevorrichtung nach einem der vorhergehenden Ansprüche, **dadurch gekennzeichnet, dass** die Analysevorrichtung eine Kamera aufweist oder mit einer Kamera zusammenwirkt.

9. Verfahren zur Analyse von Dentalfarben, das ein Gehäuse, eine Rechnervorrichtung mit einer Speichereinheit und einen Bildschirm aufweist, auf dem ein Referenzobjekt gemeisam mit wenigstens einem Zahn und/oder einem Zahnfleischbereich dargestellt wird, wobei mindestens ein Bildausschnitt des Referenzobjekts (erster Bildausschnitt) sowie mindestens ein Bildausschnitt des Zahns, eines Zahnbereichs oder Zahnfleischbereichs (zweiter Bildausschnitt) von der Rechnervorrichtung erfasst wird, **dadurch gekennzeichnet, dass** das Referenzobjekt ein dentaler Farbschlüssel (10) ist, der Farbmuster (12) aufweist, die nebeneinander angeordnet sind und je eine Dentalfarbe wiedergeben, und dass die Farbe des zweiten insbesondere wählbaren Bildausschnitts von der Rechnervorrichtung mit dem dargestellten Farbmustern (12) verglichen wird, und dass die Rechnervorrichtung anzeigt oder ausgibt, welches Farbmuster (12) der Farbe des zweiten Bildausschnitts am ähnlichsten ist.

10. Verfahren nach Anspruch 9, **dadurch gekennzeichnet, dass** die Rechnervorrichtung automatisch die Dentalfarbe signalisiert, insbesondere optisch und/oder akkustisch ausgibt.
